# EUROPÄISCHE PATENTANMELDUNG

(11) **EP 4 316 322 A1**
(43) Veröffentlichungstag der Anmeldung: **07.02.2024**
(21) Anmeldenummer: 22188243.4
(22) Anmeldetag: 02.08.2022
(51) Int. Cl.: A47J 43/046, A47J 43/07, A47J 37/06

(54) **STRÖMUNGSERZEUGER, KÜCHENMASCHINE UND VERFAHREN**

(71) Anmelder: Vorwerk & Co. Interholding GmbH, 42270 Wuppertal (DE)
(72) Erfinder: Lakshmanan, Peter, 44225 Dortmund (DE); Haunschild, Felix, 45239 Essen (DE); Schmitz, Kevin, 42781 Haan-Gruiten (DE)
(74) Vertreter: Bals & Vogel Patentanwälte PartGmbB

(57) **Zusammenfassung**

Die Erfindung betrifft eine Küchenmaschine (300) zur Zubereitung von zumindest einem Lebensmittel (10), aufweisend einen Antrieb (330), welcher dazu ausgeführt ist, zumindest ein Zubereitungswerkzeug (100, 400) in Bewegung zu versetzen, ein als ein Strömungserzeuger (100) ausgeführtes Zubereitungswerkzeug (100) zum Anströmen des zumindest einen Lebensmittels (10) mit Luft im Gefäß (320), ein Gefäß (320), welches dazu ausgeführt ist, das zumindest eine Lebensmittel (10) aufzunehmen, wobei das Gefäß (320) eine Gefäßheizung (310) aufweist, die dazu ausgeführt ist, die im Gefäß (320) eingeschlossene Luft aufzuheizen, wobei die Gefäßheizung (310) in einem Boden des Gefäßes (320) integriert ist. Ferner betrifft die Erfindung ein Verfahren zum Betreiben einer Küchenmaschine (300).

## Beschreibung

Die Erfindung betrifft eine Küchenmaschine sowie ein Verfahren zum Betreiben einer Küchenmaschine.

Aus dem Stand der Technik ist eine Vielzahl von Küchengeräten bekannt, welche unterschiedliche Aufgaben wie Zerkleinern, Kneten, Rühren, Entsaften, Erwärmen, Kühlen, in Form pressen, etc. übernehmen können.

Oftmals erfüllt ein Gerät eine spezielle Funktion bzw. erlaubt es, Lebensmittel nach einer speziellen Methode zu bearbeiten. So sind beispielsweise Nudelmaschinen zum Herstellen von geformten Nudeln aus Teig, Brotbackautomaten zum Backen von Brot oder Fritteusen zum Ausbacken von Lebensmitteln bekannt.

Besonders die Kombination einer Basiseinheit, welche elektrisch betrieben wird und einem Gefäß, in dem Lebensmittel aufgenommen und bearbeitet werden können, erlaubt es dem Benutzer, Lebensmittel zu verarbeiten, ohne das Gerät oder die Lebensmittel in der Hand halten zu müssen. Solche Geräte sind auch als Küchenmaschinen bekannt.

Um Benutzern die Zubereitung von Lebensmitteln weiter zu vereinfachen, wäre es wünschenswert, wenn weniger Geräte benutzt werden müssten und darüber hinaus die Handhabung vereinfacht werden würde.

Unter den Zubereitungsmethoden stellt das Frittieren, auch Ausbacken genannt, eine Variante dar, welche prinzipiell in einem Topf mit flüssigem Fett bzw. Öl vorgenommen werden kann. Dabei wird das Fett relativ stark erhitzt, um eine Maillard-Reaktion hervorzurufen, bei der am zu verarbeitenden Lebensmittel eine trockene Kruste und aromatische Röststoffe entstehen. Durch die hohe Temperatur kann jedoch ein erhöhtes Verletzungsrisiko bestehen. Ferner kann es durch eine unkontrollierte, starke Erhitzung des Fettes dazu kommen, dass gesundheitsschädliche Stoffe entstehen.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, eine Küchenmaschine sowie ein Verfahren zum Betreiben einer Küchenmaschine bereitzustellen, bei denen ein verbessertes Benutzererlebnis und/oder ein vergrößerter Funktionsumfang beim Verarbeiten von Lebensmitteln gewährleistet ist. Zudem sollen vorzugsweise die Sicherheit der Benutzer gewährleistet und die Vorrichtungen kosteneffizient herstellbar und betreibbar seien.

Die voranstehende Aufgabe wird gelöst durch eine Küchenmaschine mit den Merkmalen des unabhängigen Vorrichtungsanspruchs und einem Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Küchenmaschine beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Küchenmaschine zur Zubereitung von zumindest einem Lebensmittel, aufweisend einen Antrieb, welcher dazu ausgeführt ist, zumindest ein Zubereitungswerkzeug in Bewegung zu versetzen, einen als ein Strömungserzeuger ausgeführtes Zubereitungswerkzeug zum Anströmen des zumindest einen Lebensmittels mit Luft im Gefäß, ein Gefäß, welches dazu ausgeführt ist, das zumindest eine Lebensmittel aufzunehmen, wobei das Gefäß eine Gefäßheizung aufweist, die dazu ausgeführt ist, die im Gefäß eingeschlossene Luft aufzuheizen, wobei die Gefäßheizung in einem Boden des Gefäßes integriert ist, vorgesehen.

Mit dem Begriff Anströmen ist das Bereitstellen von bewegter Luft - was auch ein Luftgemisch umfassen kann - gemeint, welche die Lebensmittel an- bzw. umströmen. Dabei kann die Strömung laminar, turbulent oder innerhalb des Strömungsfeldes auch unterschiedlich ausgebildet sein. Je nachdem, welche Lebensmittel und auf welche Weise in dem Gefäß angeordnet sind, kann sich das Strömungsfeld entsprechend ändern.

Im Zusammenhang mit der Erfindung sollen unter Lebensmitteln sämtliche Substanzen, die von Menschen (oder Tieren) zur Ernährung konsumierbar sind, verstanden werden. Insbesondere kann es sich bei den Lebensmitteln um frittierbare, also ausbackbare Lebensmittel handeln. Dabei sind generell beinahe alle Lebensmittel frittierbar, solange diese eine gewisse Festigkeit aufweisen.

Unter dem Begriff Luft soll das in der Umgebung des Strömungserzeugers vorhandene Gasgemisch verstanden werden. In der Regel wird es sich dabei um normale Umgebungsluft handeln. Es ist jedoch auch denkbar, dass die Luft zumindest als vorbestimmtes Gasgemisch ausgeführt ist oder einen vorbestimmten Druck, insbesondere vom Atmosphärendruck abweichenden Druck, aufweist. Hierdurch kann der Ausbackvorgang speziell an die Lebensmittel angepasst und optimiert werden.

Bei einem Gefäß, oder auch Behältnis, im Sinne der Erfindung kann es sich um einen räumlich ausgeformten Gegenstand handeln, welcher dazu ausgeführt ist, zumindest ein Lebensmittel aufzunehmen. Unter der Beheizbarkeit des Gefäßes soll die Eignung des Gefäßes beheizt zu werden, verstanden werden. Je nach spezieller Ausprägung der Heizung kann die Anforderung unterschiedlich sein. Beispielsweise kann vorgesehen sein, dass zumindest ein Teil des Gefäßes aus Materialien ausgeformt ist, welche einer Temperatur von mindestens 100 °C, vorzugsweise 200 °C oder 220 °C standhalten. Ferner kann die Form des Gefäßes derart ausgestaltet sein, dass zumindest eine Heizung im Gefäß aufgenommen werden oder der thermische Kontakt mit der Heizung, insbesondere durch plan aufeinander liegende Flächen, verbessert werden kann. Weitere Details zu Eigenschaften des Gefäßes werden nachfolgend beschrieben.

Die Gefäßheizung kann dazu ausgeführt sein, die Luft auf eine Temperatur von zumindest 180 °C, insbesondere zumindest 200 °C aufzuheizen. Es kann ebenfalls vorgesehen sein, dass die Gefäßheizung dazu ausgeführt ist, die Luft auf eine Temperatur zwischen 50 °C und 230 °C aufzuheizen.

Wie bereits erwähnt wurde, weist das Gefäß eine Gefäßheizung auf, die dazu ausgeführt ist, die im Gefäß eingeschlossene Luft aufzuheizen, wobei die Gefäßheizung in einem Boden des Gefäßes integriert ist. Mit anderen Worten kann das Gefäß eine Wärmequelle haben, welche dazu ausgeführt ist, die im Gefäß enthaltene Luft zu erwärmen. Dies bietet den Vorteil, dass die Gefäßheizung auch dann verwendet werden kann, wenn statt des Strömungserzeugers ein anderes Zubereitungswerkzeug mit dem Antrieb verbunden ist.

Unter integriert kann insbesondere verstanden werden, dass eine aktive Komponente der Heizung, beispielsweise eine elektrische Widerstandsheizung, insbesondere in Form einer Heizspirale, eine Mikrowellenantenne und/oder eine Strahlungsquelle, nicht direkt mit dem Innenraum des Gefäßes in Kontakt steht, sondern zumindest durch eine Schicht, welche zumindest teilweise den Gefäßboden bildet, vom Innenraum, insbesondere hermetisch, abgetrennt ist. Die Integration, insbesondere hermetische Abdichtung der Heizung innerhalb des Gefäßbodens, bietet den Vorteil, dass das gesamte Gefäß leicht mit Wasser, insbesondere in einem Geschirrspüler reinigbar ist, wodurch sich die Handhabung der Küchenmaschine vereinfacht.

Es kann vorgesehen sein, dass die Heizung als Dickschichtheizung ausgeführt ist. Dieser Heizungstyp hat den Vorteil, dass dieser besonders platzsparend verbaut werden kann und zudem eine gute Wärmeleitung bietet.

Ferner kann vorgesehen sein, dass die Heizung als, insbesondere zumindest teilweise integrierte oder gekapselte, Röhrenheizung ausgeführt ist. Eine Röhrenheizung kann besonders gut hohe Wärmeströme übertragen und ist sehr robust gegenüber thermischer und mechanischer Belastung. Bei einer zumindest teilweisen Integration wird der Kontakt mit dem zumindest einen Lebensmittel verringert, sodass sich weniger oder keine Ablagerungen bilden können. Bei einer gekapselten Ausführung können sich keine Ablagerungen an der Heizung bilden.

Der Gefäßboden kann einen Stahl, insbesondere Edelstahl, Kupfer und/oder ein elektromagnetisch zumindest teilweise transparentes Material aufweisen, welcher/welches im Bereich der aktiven Komponente angeordnet ist. Metalle bieten besonders gute Wärmeleiteigenschaften, wodurch die Luft im Gefäß schnell erhitzbar ist. Ein elektromagnetisch zumindest teilweise transparentes Material kann von Mikrowellen und/oder Infrarotstrahlung durchdrungen werden, wodurch mittels Mikrowellen und/oder Infrarotheizungen eine besonders effektive Heizung der Luft im Gefäß ermöglicht wird.

Die Anordnung der Gefäßheizung am Boden des Gefäßes bietet den Vorteil, dass die Wärme (aufgrund von Konvektion) besonders gut an die im Gefäß befindliche Luft und/oder die Lebensmittel übertragen werden kann.

Die Öffnung des Gefäßes ermöglicht es, die Antriebsaufnahme durch diese Öffnung hindurch mit dem Antrieb der Küchenmaschine zu verbinden. Dadurch lässt sich ein strömungserzeugender Abschnitt des Strömungserzeugers innerhalb des Gefäßes platzieren.

Das Strömungsfeld kann innerhalb des Gefäßes derart ausgebildet sein, dass Luft vom Strömungserzeuger in Richtung eines Bodens des Gefäßes beschleunigt, vom Boden nach oben abgelenkt und nach dem Anströmen des zumindest einen Lebensmittels wieder zu einer Oberseite des Strömungserzeugers zurückgeführt wird.

Unter einem Antrieb soll ein von einer Kraftmaschine bzw. einem Motor angetriebenes Mittel verstanden werden, welches dazu geeignet ist, die von der Kraftmaschine erzeugte Kraft zu übertragen. Die Bewegung des Antriebes kann beispielsweise eine Dreh- oder eine Hin- und Herbewegung sein.

Der Strömungserzeuger stellt eine erste Funktion der Küchenmaschine bereit. Bei der ersten Funktion handelt es sich erfindungsgemäß um die Erzeugung eines Strömungsfeldes zum Anströmen des zumindest einen Lebensmittels.

Es kann vorgesehen sein, dass der Antrieb dazu ausgeführt ist, zumindest ein weiteres Zubereitungswerkzeug, insbesondere mit einer Antriebsaufnahme, in Bewegung zu versetzen, um eine zweite Funktion bereitzustellen. Hierdurch kann die Funktionalität der Küchenmaschine erweitert werden, wobei die Kosten für den Benutzer reduziert werden.

Es kann vorgesehen sein, dass das zumindest eine weitere Zubereitungswerkzeug dazu ausgeführt ist, das zumindest eine Lebensmittel zu Mahlen und/oder zu Mixen und/oder zu Rühren und/oder zu Kneten und/oder zu Zerkleinern.

Es kann ferner vorgesehen sein, dass der Strömungserzeuger auf das weitere Zubereitungswerkzeug, insbesondere auf eine Antriebsaufnahme des weiteren Zubereitungswerkzeuges und/oder ein Messer, aufsetzbar und mit diesem verbindbar ist, wodurch sich der Strömungserzeuger über die Antriebsaufnahme des weiteren Zubereitungswerkzeuges und den Antrieb der Küchenmaschine in Rotation versetzen lässt.

Bei der zweiten Funktion kann es sich insbesondere um Funktionen handeln, welche durch ein Rührmesser als Zubereitungswerkzeug bereitgestellt werden können, also z.B. Schneiden, Häckseln, Rühren, Pürieren etc. Nicht als Strömungsfeld im Sinne der Erfindung ist dabei die durch ein Rührmesser oder ähnliche Werkzeuge erzeugte Verwirbelung der Luft anzusehen.

Es kann vorgesehen sein, dass die Küchenmaschine das weitere Zubereitungswerkzeug, insbesondere ein Rührmesser, aufweist. Das weitere Zubereitungswerkzeug kann dazu konfiguriert sein, lösbar zumindest mit dem Antrieb oder dem Gefäß verbindbar zu sein.

Es ist ferner denkbar, dass die Küchenmacheine eine Basis aufweist, in welcher der Antrieb angeordnet ist, wobei das Gefäß lösbar mit der Basis verbunden ist. Durch die lösbare Verbindung zwischen Gefäß und Basis ist die Küchenmaschine besonders flexibel handhabbar. Insbesondere kann so das Gefäß leicht gereinigt werden.

Es kann vorgesehen sein, dass das Gefäß eine untere Öffnung aufweist, die dazu ausgeführt ist, eine Antriebsaufnahme aufzunehmen. Durch eine derartige Konstruktion lassen sich die Zubereitungswerkzeuge besonders einfach wechseln und so die Küchenmaschine insgesamt einfach verwenden.

Die Küchenmaschine gemäß der Erfindung bietet den Vorteil, dass durch die Kombination des beheizbaren Gefäßes mit dem Strömungserzeuger durch die Anströmung der Lebensmittel mit heißer Luft die Funktion der Küchenmaschine um eine Frittier- bzw. Ausbackfunktion ergänzt werden kann. Durch die Integration der Heizung im Boden des Gefäßes wird zudem die Sicherheit verbessert, da dieser kaum versehentlich von oben berührt werden kann. Wenn eine andere Funktion als das Frittieren gewünscht ist, kann durch die lösbare Verbindung der Antriebsaufnahme ggf. auf ein anderes Zubereitungswerkzeug gewechselt werden. Da kein gesondertes, autarkes Gerät zum Frittieren benötigt wird, sind zudem Kosteneinsparungen für die Benutzer möglich.

Es ist bei der erfindungsgemäßen Küchenmaschine denkbar, dass der Strömungserzeuger ferner eine Antriebsaufnahme, welche dazu ausgeführt ist, mit einem Antrieb der Küchenmaschine lösbar verbunden zu werden und eine Bewegung des Antriebes zu übertragen, und/oder ein Laufrad, welches mit der Antriebsaufnahme verbunden ist, umfasst, wobei das Laufrad dazu ausgeführt ist, durch den Antrieb über die Antriebsaufnahme in Bewegung versetzt zu werden, wodurch innerhalb des beheizbaren Gefäßes ein Strömungsfeld erzeugt wird.

Unter einer Antriebsaufnahme soll ein geometrisch ausgeformter Körper verstanden werden, welcher dazu ausgeführt ist, eine an ihm wirkende Kraft aufzunehmen, wodurch die Antriebsaufnahme in Bewegung versetzbar ist. Insbesondere kann es sich bei der Bewegung um eine Rotation handeln. Es kann jedoch beispielsweise auch vorgesehen sein, dass die Bewegung eine Hin- und Herbewegung ist. Die Antriebsaufnahme kann als Welle, mit anderen Worten als ein längliches zylinderförmiges und rotierendes Maschinenelement, das zur Übertragung von Drehbewegungen und Drehmomenten dient, ausgeführt sein. Alternativ kann die Antriebsaufnahme als Pleuelstange ausgeführt sein.

Mit anderen Worten kann vorgesehen sein, dass der Strömungserzeuger ein Laufrad aufweist. Der Strömungserzeuger kann als ein bewegtes, insbesondere rotierendes, Teil einer Strömungsmaschine aufgefasst werden, welches einem strömenden Fluid, insbesondere Luft, Energie zuführt und das Fluid dadurch in Bewegung versetzt. Bei der Bewegung kann es sich um jede Bewegung handeln, welche dazu geeignet ist, die Luft in Bewegung zu versetzen, um eine Strömung zu erzeugen. Weitere Einzelheiten und Varianten des Laufrades werden nachfolgend beschrieben.

Durch die Bewegung des Laufrades wird ein Strömungsfeld erzeugt. Mit anderen Worten erzeugt das Laufrad durch seine Bewegung eine Strömung der Luft. Im Folgenden wird der Begriff stromaufwärts genutzt, um eine Lage in Strömungsrichtung vor dem Laufrad zu beschreiben. Entsprechend soll der Begriff stromabwärts eine Lage in Strömungsrichtung nach dem Laufrad beschreiben.

Es kann vorgesehen sein, dass das Laufrad dazu ausgeführt ist, zumindest eine Drehzahl von 2000, insbesondere 3000 Umdrehungen pro Minute ausführen zu können. Dadurch lässt sich das Strömungsfeld besonders gut einstellen.

Weiterhin ist es bei einer erfindungsgemäßen Küchenmaschine denkbar, dass zumindest das Laufrad oder die Antriebsaufnahme frei von elektrischen (auch genannt: elektrischfreien oder rein mechanischen) Komponenten, insbesondere frei von einem Strömungsheizer ist. Mit anderen Worten kann vorgesehen sein, dass zumindest das Laufrad oder die Antriebsaufnahme keine elektrischen Bauteile (bzw. nur rein mechanische Bauteile) umfassen, und insbesondere kein Heizdraht oder dergleichen vorgesehen ist. Hierdurch wird der Vorteil erreicht, dass der Strömungserzeuger weniger empfindlich, insbesondere gegenüber Korrosion, ausgestaltet werden kann.

Es kann vorgesehen sein, dass der Strömungserzeuger dazu ausgeführt ist, dass dieser in einer Spülmaschine reinigbar ist. Hierzu kann vorgesehen sein, dass der Strömungserzeuger, wie oben beschrieben, keine elektronischen Komponenten aufweist. Alternativ können die elektrischen Komponenten jedoch auch (durch Kunststoff und/oder Vergussmasse) vergossen sein. Ferner kann der Strömungserzeuger zumindest an einer äußeren Oberfläche ein Material, insbesondere einen Kunststoff oder einen (Edel)Stahl aufweisen, welcher zur Reinigung in der Spülmaschine geeignet ist. Hierdurch wird die Handhabung des Strömungserzeugers vereinfacht.

Weiterhin ist es bei einer erfindungsgemäßen Küchenmaschine denkbar, dass ein Abscheiderlaufrad vorgesehen ist, welches vorzugsweise stromaufwärts (oder räumlich über bzw. oberhalb) des Laufrades angeordnet und dazu konfiguriert ist, in der Luft enthaltene Schwebstoffe abzuscheiden. Mit anderen Worten, kann in Strömungsrichtung vor dem Laufrad ein weiteres Laufrad angeordnet sein, welches in der strömenden Luft enthaltene Teilchen von der Luft separiert. Dies geschieht im Wesentlichen durch auf die Schwebteilchen wirkende Fliehkräfte. Durch das Vorsehen eines Abscheiderlaufrads lässt sich der Vorteil erreichen, dass Schwebstoffe nicht das Laufrad oder andere stromabwärts gelegene Teile, etwa eine Heizung erreichen. Schwebstoffe können die Lauffähigkeit des Laufrades negativ beeinflussen oder beispielsweise auf der Heizung stark erhitzen, was zu unangenehmer Geruchsbildung führen kann. Ferner kann das Abscheiderlaufrad ebenfalls dazu ausgeführt sein, die Strömungserzeugung des Laufrades zu unterstützen, indem Luft in stromabwärts Richtung Laufrad beschleunigt wird.

Es kann vorgesehen sein, dass das Laufrad mehrstufig ausgebildet ist, wobei das Abscheiderlaufrad eine weitere, stromaufwärts angeordnete Stufe zu dem Laufrad bildet, welches für die Erzeugung des Strömungsfeldes ausgebildet ist. Ferner kann zwischen dem Abscheiderlaufrad und dem Laufrad noch ein feststehendes Leitrad angeordnet sein. Dies bietet den Vorteil, dass die Strömung vor dem Laufrad konfiguriert werden kann, um die Effizienz des Laufrades zu steigern.

Vorzugsweise kann bei einer erfindungsgemäßen Küchenmaschine vorgesehen sein, dass das Abscheiderlaufrad mit zumindest mit dem Laufrad oder der Antriebsaufnahme (variabel lösbar oder fest) verbunden ist, wobei insbesondere eine Übersetzung vorgesehen ist, durch welche eine Drehzahl des Abscheiderlaufrades sich von einer Drehzahl des Laufrades unterscheiden oder variieren kann. Durch die Verbindung von Laufrad oder Antriebsaufnahme mit dem Abscheiderlaufrad wird der Vorteil erreicht, dass beide Räder auf einfache Art und Weise gleichsam von (nur) einem Antrieb der Küchenmaschine bewegt werden können. Dadurch werden Kosten für weitere Antriebe eingespart.

Durch eine Übersetzung zwischen Laufrad und Abscheiderlaufrad lassen sich die Drehzahlen der Laufräder unabhängig voneinander einstellen. Je nach Auslegung des Abscheiderlaufrades oder je nachdem, welche Schwebeteilchen oder Partikel in der Luft vorkommen, kann eine sich vom Laufrad unterscheidende Drehzahl des Abscheiderlaufrades besser dazu geeignet sein, Schwebeteilchen abzuscheiden. Bei den Schwebeteilchen oder Partikeln kann es sich insbesondre um Fett und/oder Gargutreste handeln.

Es kann bei einer Küchenmaschine ferner vorgesehen sein, dass zumindest ein Durchmesser oder eine Höhe der Antriebsaufnahme derart gewählt ist, dass diese zumindest einem Durchmesser oder einer Höhe einer Antriebsaufnahme eines weiteren Zubereitungswerkzeuges entsprechen, wobei das Zubereitungswerkzeug dazu ausgeführt ist, eine von der Bereitstellung von Strömung verschiedene Funktion bereitzustellen. Mit anderen Worten kann die Antriebsaufnahme in ihren geometrischen Abmessungen derart ausgestaltet sein, dass sie einer Antriebsaufnahme entspricht, welche Teil eines Zubereitungswerkzeuges ist, welches eine andere Funktion bereitstellt als das Beschleunigen von Luft zu einer Strömung. Hierdurch wird der Vorteil erreicht, dass Benutzer den Strömungserzeuger leicht gegen ein anderes Zubereitungswerkzeug, insbesondere ein Rührmesserwerkzeug, austauschen können, ohne dass ein komplizierter Umbau an der Küchenmaschine notwendig wäre. Dadurch lassen sich ferner Kosten und auch Platz in der Küche (für weitere Geräte) einsparen.

Es kann vorgesehen sein, dass zumindest ein Aufnahmeabschnitt der Antriebsaufnahme, der dazu ausgeführt ist, mit dem Antrieb, insbesondere mechanisch, verbunden zu werden, kompatibel, insbesondere geometrisch identisch zu einem entsprechenden Aufnahmeabschnitt eines Zubereitungswerkzeuges mit einer weiteren Funktion ausgebildet ist. Hierdurch kann sowohl der Vorteil erreicht werden, dass der Strömungserzeuger leicht gegen ein anderes Zubereitungswerkzeug getaucht werden, als auch dass in Bezug auf die Antriebsaufnahme noch gewisse Designfreiheiten verbleiben.

Im Rahmen der Erfindung ist es weiterhin denkbar, dass zumindest die Antriebsaufnahme oder das Laufrad Metall und/oder Kunststoff umfasst, und bevorzugt die Antriebsaufnahme im Wesentlichen aus einem Metall, insbesondere aus einem Stahl geformt ist und/oder dass das Laufrad im Wesentlichen aus einem Kunststoff, insbesondere aus einem thermoplastischen Kunststoff geformt ist. Dabei ist mit im Wesentlichen zumindest die Hälfte, insbesondere zu einem Anteil von mehr als 90 % gemeint. Es kann auch vorgesehen sein, dass die Antriebsaufnahme bzw. das Laufrad nahezu vollständig aus einem Metall bzw. einem Kunststoff bestehen. Metall bietet in Bezug auf die Antriebsaufnahme den Vorteil, dass das Bauteil mechanisch stabil ist, sodass es auch hohen Belastungen bei einem starken Antrieb standhält. Stahl, insbesondere rostfreier Stahl, teilt diese guten mechanischen Eigenschaften und weist darüber hinaus eine hohe Korrosionsbeständigkeit auf, sodass sich die Antriebsaufnahme leicht, insbesondere in einem Geschirrspüler, reinigen lässt.

Weiterhin ist es bei einer erfindungsgemäßen Küchenmaschine denkbar, dass das Laufrad ferner zumindest eine der folgenden Komponenten aufweist:
- einen Laufraddeckel mit einer Öffnung, durch die Luft in das Laufrad einströmen kann,
- einen Laufradboden, welcher dazu ausgeführt ist, die Strömung der Luft durch das Laufrad zu begrenzen,
- zumindest eine Laufradschaufel, welche dazu ausgeführt ist, Luft zu beschleunigen, wobei insbesondere die zumindest eine Laufradschaufel zwischen dem Laufraddeckel und dem Laufradboden angeordnet ist,
- einen Verbindungsabschnitt, welcher dazu ausgeführt ist, das Laufrad mit der Antriebsaufnahme, insbesondere lösbar, zu verbinden.

Es kann vorgesehen sein, dass der Durchmesser des Laufraddeckels im Wesentlichen dem Durchmesser eines Korbes entspricht, in welchem das zumindest eine zuzubereitende Lebensmittel gehalten wird. Hierdurch wird die Anströmung der Lebensmittel verbessert.

Ferner kann vorgesehen sein, dass die Antriebsaufnahme zumindest teilweise durch die Öffnung des Laufraddeckels hindurchragt. Hierdurch ergibt sich eine Leitwirkung auf die Strömung, wodurch die Strömung der Luft in das Laufrad verbessert wird.

Der Laufradboden kann sowohl mit als auch ohne zumindest eine Öffnung ausgebildet sein. Das Vorsehen von Öffnungen bietet den Vorteil, dass das Laufrad bzw. der Strömungserzeuger insgesamt leichter, insbesondere in einem Geschirrspüler, reinigbar ist, da durch zumindest eine Öffnung Reinigungsmittel besser verteilt werden kann. Ferner ist das Laufrad mit weniger Material fertigbar, wodurch kosten gespart werden. Ein Vollflächiger Laufradboden bietet den Vorteil, dass die mechanische Stabilität verbessert ist und zudem verhindert wird, dass sich eine die Laufräder umgehende eine Strömung ausbildet. Hierdurch lässt sich die Effizienz des Laufrades weiter steigern.

Die zumindest eine Laufradschaufel kann insbesondere zwischen Laufraddeckel und Laufradboden angeordnet sein, wodurch sich eine besonders hohe mechanische Stabilität ergibt. Es kann jedoch auch vorgesehen sein, dass die zumindest eine Laufradschaufel nur an einem Laufraddeckel oder Laufradboden angeordnet ist. Durch das Fortlassen eines Laufraddeckels oder Laufradbodens können Materialkosten gespart werden.

Es kann vorgesehen sein, dass zumindest zwei, insbesondere sämtliche oben aufgeführten Komponenten des Laufrades einstückig (und/oder materialeinheitlich) ausgeführt sind. Hierdurch wird die mechanische Stabilität des Laufrades weiter verbessert.

Es kann ebenfalls vorgesehen sein, dass das Laufrad oder zumindest eine, insbesondere sämtliche der oben aufgeführten Komponenten durch einen Spritzguss, insbesondere 2-Komponentenspritzgussverfahren herstellbar sind. Hierdurch werden die Herstellkosten des Laufrades reduziert.

Weiterhin kann bei einer erfindungsgemäßen Küchenmaschine vorteilhafterweise vorgesehen sein, dass ein Strömungsheizer vorgesehen ist, welcher dazu ausgeführt ist, die in dem Gefäß befindliche Luft zu heizen, wobei der Strömungsheizer insbesondere am Laufrad, vorzugsweise zumindest an einem Laufraddeckel oder an einem Laufradboden angeordnet ist. Mit anderen Worten kann an dem Strömungserzeuger eine Heizung angeordnet sein, welche die strömende Luft erhitzt.

Besonders vorteilhaft kann der Strömungsheizer an einer Position innerhalb des Strömungserzeugers angeordnet sein, an dem die Strömungsgeschwindigkeit der Luft gering, insbesondere am niedrigsten ist. Dadurch wir die erzeugte Wärme besonders Effizient an die Luft abgegeben.

Weiterhin ist es bei einer erfindungsgemäßen Küchenmaschine denkbar, dass die Antriebsaufnahme eine Dichtung aufweist, um die Antriebsaufnahme gegen das Gefäß abzudichten. Mit anderen Worten kann an der Antriebsaufnahme ein Element aufweisen, welches dazu ausgeführt ist, einen ungewollten Stoffübergang zwischen der Antriebsaufnahme und dem Gefäß zu verhindern oder zumindest zu begrenzen.

Vorteilhaft kann vorgesehen sein, dass die Dichtung aus einem Kunststoff ausgeführt ist, welcher insbesondere spülmaschinenfest ist. Hierdurch wird die Handhabung des Strömungserzeugers weiter vereinfacht.

Ferner kann vorgesehen sein, dass die Dichtung lösbar an der Antriebsaufnahme befestigbar ist. Hierdurch lässt sich die Dichtung einfach gesondert reinigen oder falls notwendig austauschen, sodass die Handhabung vereinfacht und Kosten gespart werden können.

Es kann vorgesehen sein, dass die Basis elektrisch mit dem Gefäß verbindbar ist. Hierdurch kann das Gefäß elektrisch angesteuert z.B. eine Heizung im Gefäß betrieben werden. Insbesondere in Kombination mit einer am Boden des Gefäßes angeordneten Heizung ergibt sich der Vorteil, dass diese besonders einfach und kostengünstig verbindbar ist, da die Leitungen entsprechend kurz ausgelegt werden können.

Vorzugsweise kann bei einer erfindungsgemäßen Küchenmaschine vorgesehen sein, dass lediglich ein Antrieb und/oder lediglich eine Heizung vorgesehen sind, wobei insbesondere die lediglich eine Heizung als Gefäßheizung ausgeführt ist. Mit anderen Worten kann an der Küchenmaschine ein einziger Antrieb und/oder eine einzige Heizvorrichtung vorhanden sein. Dadurch werden die Herstellkosten der Küchenmaschine gegenüber Varianten mit mehreren Antrieben oder Heizungen reduziert. Sind der Antrieb oder die Heizung für mehrere Zubereitungswerkzeuge nutzbar, ergibt sich für Benutzer der Vorteil, dass die Küchenmaschine für viele unterschiedliche Funktionen nutzbar ist, wodurch weniger Küchengeräte benötigt wird, was die Handhabung vereinfacht, Platz spart und zudem die Kosten reduziert.

Vorzugsweise kann bei einer erfindungsgemäßen Küchenmaschine vorgesehen sein, dass das Gefäß mit dem Strömungserzeuger im Wesentlichen luftdicht verschließbar ist, sodass der Strömungserzeuger eine Umluft erzeugt. Mit anderen Worten kann vorgesehen sein, dass das Gefäß zusammen mit dem Strömungserzeuger einen im Wesentlichen luftundurchlässigen Raum bildet, wobei diesem Raum auch bei der Erzeugung einer Strömung durch den Strömungserzeuger keine Frischluft zugeführt wird. Dies bietet den Vorteil, dass weniger Wärme verloren geht, sodass die Küchenmaschine die Luft effizienter heizen kann, wodurch wiederum Kosten eingespart werden können. Hierzu kann am Gefäß ein insbesondere klapp- und oder lösbarer Deckel vorgesehen sein. Ein Deckel bietet den Vorteil, dass zum einen das zumindest eine Lebensmittel leicht in das Gefäß eingefüllt und dennoch ein luftdichter Verschluss gewährleistet werden kann.

Vorzugsweise kann bei einer erfindungsgemäßen Küchenmaschine vorgesehen sein, dass ein Korb vorgesehen ist, welcher dazu ausgeführt ist, die Lebensmittel aufzunehmen und beabstandet von einer Gefäßwand des Gefäßes und zumindest dem Zubereitungswerkzeug oder dem weiteren Zubereitungswerkzeug zu halten. Mit anderen Worten kann die Küchenmaschine einen Halter für das zumindest eine Lebensmittel aufweisen, welches das zumindest eine Lebensmittel in einem vordefinierten Abstand zu dem Strömungserzeuger oder dem weiteren Zubereitungswerkzeug hält. Der Korb bietet den Vorteil, dass durch die Beabstandung der Lebensmittel zu den Gefäßwänden und dem Strömungserzeuger sich das Strömungsfeld besser ausbilden und damit das zumindest eine Lebensmittel besser angeströmt werden kann.

Der Korb kann als Drahtgitter ausgebildet sein, wodurch Luft den Korb besonders leicht durchdringen kann, sodass die Anströmung der Lebensmittel verbessert wird. Alternativ oder in Ergänzung kann der Korb zumindest teilweise vollflächig mit Löchern ausgebildet sein. Auch hierdurch wird eine Luftströmung ermöglich, wobei die mechanische Stabilität verbessert wird. Dies kann insbesondere in einem unteren Bereich des Korbes vorteilhaft sein.

Ferner kann bei einer erfindungsgemäßen Küchenmaschine vorteilhafterweise vorgesehen sein, dass der Korb einen im Wesentlichen rohrförmigen Abschnitt aufweist, welcher von einer Kappe derart abgedeckt wird, dass eine im Wesentlichen ringförmige Öffnung entsteht, durch welche die Luft zum Strömungserzeuger strömt, wenn der Strömungserzeuger vom Antrieb angetrieben ist. Hierdurch wird der Vorteil erreicht, dass Schwebstoffe oder Partikel, welche schwerer sind als Luft, stromaufwärts vom Strömungserzeuger von der Luft getrennt werden. Hierdurch wird sichergestellt, dass diese Schwebstoffe oder Partikel nicht in den Strömungserzeuger oder auf die Heizung gelangen.

Es kann vorgesehen sein, dass der rohrförmige Abschnitt eine Länge hat, die zumindest einem Drittel der Höhe des Korbes, insbesondere zumindest der Hälfte der Höhe des Korbes entspricht. Hierdurch kann die Abscheidewirkung des rohrförmigen Abschnittes verbessert werden.

Unter ringförmig soll nicht zwangsläufig eine kreisrunde form verstanden werden. Die Form der Öffnung ist bedingt durch die Form des Rohres und der Kappe, welche zylindrisch bzw. kugelförmig, aber auch beispielsweise im rechteckig bzw. würfelförmig geformt sein können. Die Kappe ist jedoch größer als der rohrförmige Abschnitt, sodass zwischen diesen beiden Teilen noch eine Öffnung für den Durchtritt von Luft freibleibt.

Im Rahmen der Erfindung ist es weiterhin denkbar, dass der Korb an einem Bodenabschnitt zumindest eine Rinne aufweist, welche dazu ausgeführt ist, mit der Luftströmung transportierte Schwebstoffe aufzunehmen, oder eine, insbesondere verschließbare, Öffnung aufweist, durch die mit der Luftströmung transportierte Schwebstoffe aus dem Korb heraustreten können. Mit anderen Worten kann am Boden des Korbes eine Ausnehmung vorgesehen sein, in welcher sich Schwebstoffe oder Partikel sammeln können. Alternativ oder in Ergänzung kann am Boden auch eine Öffnung sein, durch welche die Schwebstoffe oder Partikel hindurchtreten oder abfließen können.

Durch die Rinne wird der Vorteil erreicht, dass die Schwebstoffe oder Partikel gesammelt werden und nicht in der Luftströmung verbleiben. Die Öffnung bietet den Vorteil, dass die Schwebstoffe oder Partikel an einem vorbestimmten Ort aus dem Korb austreten. Hierdurch wird die Handhabung der Küchenmaschine vereinfacht.

Es ist ferner bei einer erfindungsgemäßen Küchenmaschine denkbar, dass eine Auffangschale vorgesehen ist, welche zumindest oberhalb des Strömungserzeugers oder unterhalb eines Korbes angeordnet und dazu ausgeführt ist, mit der Luftströmung transportierte Schwebstoffe aufzunehmen. Mit anderen Worten kann ein Auffangbehälter vorgesehen sein, in dem sich Schwebstoffe oder Partikel ansammeln können. Hierdurch wird verhindert, dass diese in der strömenden Luft verbleiben oder in Berührung mit der Heizung kommen.

Ferner kann bei einer erfindungsgemäßen Küchenmaschine vorteilhafterweise vorgesehen sein, dass ein Deckel vorgesehen ist, welcher dazu ausgeführt ist, eine obere Öffnung des Gefäßes zu verschließen, wobei insbesondere der Deckel zumindest aufweist:
- eine Deckelheizung, die dazu ausgeführt ist, die im Gefäß eingeschlossene Luft aufzuheizen, oder
- ein Lüftungsventil, welches dazu ausgeführt ist, einen Druckunterschied zwischen einer Atmosphäre im Gefäß und außerhalb des Gefäßes unter einem vorbestimmten Wert zu halten.

Mit anderen Worten kann am Gefäß ein oberer Verschluss vorgesehen sein. Dadurch kann das Gefäß verschlossen werden, wodurch das erzeugte Strömungsfeld leichter einstellbar ist. Zudem wird die Effizient der Heizung erhöht, da weniger Frischluft zugeführt wird.

Eine Deckelheizung, bzw. eine im Deckel angeordnete Heizung, die es ermöglicht, die im Gefäß enthaltene Luft zu erwärmen, bietet den Vorteil, dass neben der Luft auch, insbesondere durch Strahlungswärme, auch das zumindest eine Lebensmittel erwärmt wird.

Es kann vorgesehen sein, dass die Deckelheizung über im Gefäß angeordnete Leitung von der Basis der Küchenmaschine her bestromt wird. Dies erleichtert gegenüber einem gesonderten Stromanschluss für den Deckel die Handhabung.

Ein Lüftungsventil zum Ausgleichen von Druckunterschieden zwischen dem Gefäßinhalt und der Atmosphäre verhindert, dass ein zu großer Druckunterschied entsteht. Ein sehr großer Druckunterschied würde einen entsprechend ausgelegten Deckelverschluss nötig machen, welcher zusätzliche Kosten verursacht.

Ferner kann bei einer erfindungsgemäßen Küchenmaschine vorteilhafterweise vorgesehen sein, dass der Strömungserzeuger einen Strömungsheizer aufweist, der dazu ausgeführt ist, die im Gefäß eingeschlossene Luft aufzuheizen. Mit anderen Worten kann an dem Strömungserzeuger eine Heizung angeordnet sein, welche die strömende Luft erhitzt.

Besonders vorteilhaft kann der Strömungsheizer an einer Position innerhalb des Strömungserzeugers angeordnet sein, an dem die Strömungsgeschwindigkeit der Luft gering, insbesondere am niedrigsten ist. Dadurch wir die erzeugte Wärme besonders Effizient an die Luft abgegeben.

Vorzugsweise kann bei einer erfindungsgemäßen Küchenmaschine vorgesehen sein, dass das Gefäß eine Isolation aufweist, welche dazu konfiguriert ist, das Gefäß thermisch von der Umgebung des Gefäßes zu isolieren. Mit anderen Worten kann das Gefäß mit einem Dämmmaterial ausgestattet sein, wodurch das Gefäß und dessen Inhalt eine gegenüber einem Gefäß ohne Isolation geringere Wärmeleitung aufweist. Hierdurch wird die Effizient der Küchenmaschine weiter gesteigert, wodurch diese sich besonders kostengünstig betreiben lässt.

Beispielsweise kann die Isolation als Doppelwandung des Gefäßes ausgeführt sein, wodurch sich eine gute thermische Isolation bei nur geringfügig erhöhtem Gewicht ergibt.

Ebenfalls kann vorgesehen sein, dass die Isolation über das Gefäß überstülpbarer ausgeführt ist. Hierdurch ist das Anbringen der Isolation besonders einfach.

Gemäß einem weiteren Aspekt der Erfindung ist ein Verfahren zum Betreiben einer Küchenmaschine vorgesehen, wobei die Küchenmaschine insbesondere als eine erfindungsgemäße Küchenmaschine ausgeführt ist, zur Zubereitung von zumindest einem Lebensmittel beinhaltend:
- Bereitstellen eines Antriebs in einer Basis,
- Lösbares Verbinden einer Antriebsaufnahme eines ersten Zubereitungswerkzeugs mit dem Antrieb,
- Verbinden des Gefäßes mit der Basis,
- In Bewegung Versetzen eines Zubereitungswerkzeugs mit einer Antriebsaufnahme durch einen Antrieb, wodurch eine erste Funktion bereitgestellt wird,
- Heizen zumindest einer sich im Gefäß befindlichen Luft durch eine Heizung,
- Lösen der Verbindung der Antriebsaufnahme mit dem Antrieb,
- Lösbares Verbinden einer Antriebsaufnahme eines weiteren Zubereitungswerkzeugs mit dem Antrieb,
wobei die Heizung zum Heizen der sich im Gefäß befindlichen Luft als eine Gefäßheizung ausgeführt ist, die in einem Boden des Gefäßes integriert ist.

Die Verfahrensschritte können dabei zumindest teilweise gleichzeitig oder zeitlich nacheinander ablaufen, sodass einzelne Schritte in unterschiedlicher Reihenfolge durchführbar sind.

Somit bringt das erfindungsgemäße Verfahren die gleichen Vorteile mit sich, wie sie bereits ausführlich mit Bezug auf einen erfindungsgemäßen Strömungserzeuger und/oder eine erfindungsgemäße Küchenmaschine beschrieben worden sind.

Es kann vorgesehen sein, dass zur Ansteuerung der Küchenmaschine ein Frittiermodus vorgesehen ist, welcher über eine Steuereinheit an der Küchenmaschine aktivierbar ist. Der Frittiermodus kann dazu ausgeführt sein, eine automatische, insbesondere rezeptgesteuerte, Abarbeitung von Zubereitungsschritten durch zumindest ein Zubereitungswerkzeug der Küchenmaschine zu steuern. Hierdurch wird eine Lebensmittelspezifische optimale Zubereitung ermöglicht.

Es ist denkbar, dass im Frittiermodus zumindest die Heizung oder der Strömungserzeuger gargutspezifisch bzw. rezeptabhängig angesteuert werden. Hierdurch lässt sich die Qualität der Verarbeitung des zumindest einen Lebensmittels steigern und die Handhabung vereinfachen.

Die Ansteuerung kann zumindest einen Ansteuerparameter umfassen. Der zumindest eine Ansteuerparameter kann die Temperaturbereiche/-rampen und damit die Leistung der Heizung, die Drehzahl zumindest des Laufrades oder des Abscheiderlaufrades sowie eine Zeit umfassen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1:: eine Seitenschnittansicht einer erfindungsgemäßen Küchenmaschine mit einem Strömungserzeuger,
- Figur 2:: eine weitere Seitenschnittansicht einer erfindungsgemäßen Küchenmaschine mit einem Strömungserzeuger,
- Figur 3:: eine perspektivische Ansicht eines Strömungserzeugers,
- Figur 4:: eine Seitenschnittansicht eines Korbes und einer Auffangschale
- Figur 5:: eine perspektivische Ansicht eines Zubereitungswerkzeuges, und
- Figur 6:: eine weitere Seitenschnittansicht eines Teils einer erfindungsgemäßen Küchenmaschine mit einem Strömungserzeuger.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

In den nachfolgend beschriebenen Figuren sind einige Merkmale nur teilweise dargestellt, um die Darstellung zu vereinfachen und die Verständlichkeit zu verbessern.

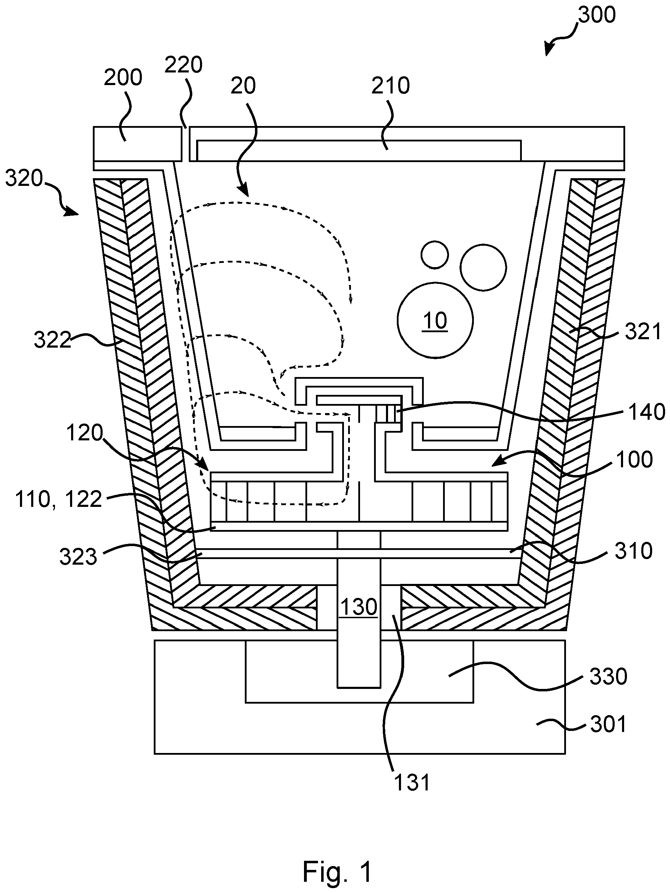

Figur 1 zeigt eine Küchenmaschine 300, welche einen Antrieb 330 umfasst, welcher dazu ausgeführt ist, zumindest ein erstes Zubereitungswerkzeug 100 mit einer Antriebsaufnahme 130 in Bewegung zu versetzen, um eine erste Funktion bereitzustellen. Die Kraft für den Antrieb 330 kann durch einen Motor, insbesondere einen Elektromotor (hier nicht dargestellt) bereitgestellt werden. Der Antrieb 330 ist einer Basis 301 der Küchenmaschine 300 angeordnet.

Ferner ist in der Figur 1 erkennbar, dass in einem Gefäß 320 eine Gefäßheizung 310 vorgesehen ist. Das Gefäß 320 kann eine obere Öffnung 324 aufweisen, durch das zumindest eine Lebensmittel 10 in das Gefäß eingebracht und wieder entnommen werden kann. Das Gefäß 320 kann insbesondere von der Basis 301 abnehmbar ausgestaltet sein. Die Gefäßheizung 310 ist dazu ausgeführt, die im Gefäß 320 eingeschlossene Luft aufzuheizen, wobei die in Fig. 1 dargestellte Gefäßheizung 310 in einen Gefäßboden 323 des Gefäßes 320 integriert ist.

Die dargestellte Küchenmaschine 300 enthält zudem einen Strömungserzeuger 100 zum Anströmen von zumindest einem Lebensmittel 10 mit Luft in dem beheizbaren Gefäß 320. Der Strömungserzeuger 100 hat eine Antriebsaufnahme 130, welche dazu ausgeführt ist, mit einem Antrieb 330 der Küchenmaschine 300 lösbar verbunden zu werden und eine Bewegung des Antriebes 330 zu übertragen. Ferner hat der Strömungserzeuger 100 ein Laufrad 120, welches mit der Antriebsaufnahme 130 verbunden ist, wobei das Laufrad 120 dazu ausgeführt ist, durch den Antrieb 330 über die Antriebsaufnahme 130 in Bewegung versetzt zu werden, wodurch innerhalb des beheizbaren Gefäßes 320 ein Strömungsfeld 20 erzeugt wird.

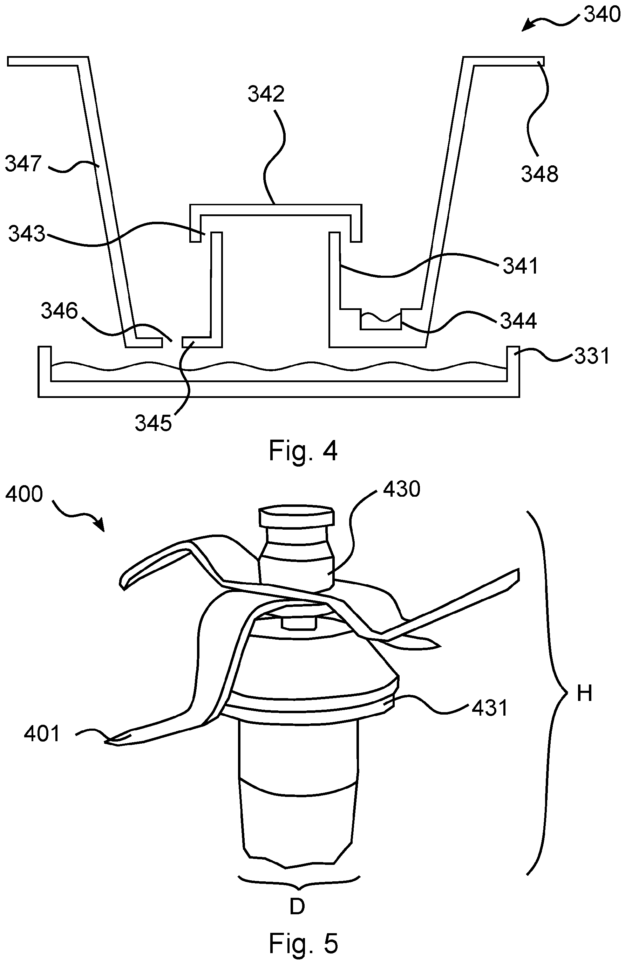

Wie in der Figur 1 erkennbar ist, verläuft die Strömung des Strömungsfeldes 20 ausgehend vom Laufrad 120 hin zu einer seitlichen Gefäßwand 321 und wird von dieser nach oben abgelenkt, um schließlich in Richtung der Mitte des Gefäßes 320 zu strömen. Dort befindet sich in der Regel das zumindest eine Lebensmittel 10, welches mit der beheizten Luft beströmt werden soll. Der Einfachheit halber ist hier nur eine Hälfte des Strömungsfeldes 20 gezeigt. Das zumindest eine Lebensmittel 10 kann in einem Korb 340 (hier nicht gezeigt) angeordnet sein, welcher näher im Zusammenhang mit der Figur 4 beschrieben wird.

Es kann vorgesehen sein, dass das Gefäß 320 mit dem Strömungserzeuger 100 im Wesentlichen luftdicht verschließbar sind, sodass der Strömungserzeuger 100 eine Umluft erzeugt. Mit anderen Worten kann also ein Umluftbetrieb der Küchenschiene vorgesehen sein.

Zumindest das Laufrad 120 oder die Antriebsaufnahme 130 können frei von elektrischen Komponenten, insbesondere frei von einem Strömungsheizer 110 ausgeführt sein. Dadurch lassen sich das Laufrad 120 und die Antriebsaufnahme 130 leicht auch unter Wasser oder in einem Geschirrspüler reinigen und sind zudem günstig herstellbar.

Wir in der Figur 1 gezeigt ist, kann ein Abscheiderlaufrad 140 vorgesehen sein, welches stromaufwärts (oder räumlich über bzw. oberhalb) des Laufrades 120 angeordnet und dazu konfiguriert ist, in der Luft enthaltene Schwebstoffe abzuscheiden. Wie dargestellt strömt die Luft innerhalb des Strömungsfeldes 20 nach dem Anströmen des zumindest einen Lebensmittels 10 durch eine Öffnung im Korb 340 zum Abscheiderlaufrad 140. Durch die im Abscheiderlaufrad 140 erzeugten Zentrifugalkräfte werden Schwebeteilchen und Partikel vom Abscheiderlaufrad 140 herausgeschleudert und von der Luft getrennt und können sich an einem Boden des Korbes 340 sammeln.

Mit anderen Worten dient das Abscheiderlaufrad 140 als ein Element, welches verhindert, dass Fett und/oder Gargutreste auf die Heizung 110, 210, 310 geraten, ausgeführt sein. Falls sich Fett und/oder Gargutreste auf die Heizung 110, 210, 310 ablagern, kann es zu ungewollten Verbrennungen auf der Heizung 110, 210, 310 kommen. Um dies zu verhindern, werden die Luft im Strömungsfeld 20 und Partikel sowie Flüssigkeiten (z.B. Fett) separiert. Das Abscheiderlaufrad 140 entspricht einer rotierenden Ansaugung, die Fett und weitere Partikel sowie Flüssigkeiten durch Fliehkräfte abscheidet. Konkret wird so die im Gefäß 320 umlaufende Luft in eine Art rotierende Düse radial in Richtung ihrer Drehachse eingesaugt. Dabei wirkt die Fliehkraft der Luftbewegung entgegen und es werden Flüssigkeiten (z.B. Fett) oder Partikel größerer Dichte als Luft, die nicht mit der Heizung 110, 210, 310 in Kontakt kommen sollen, radial nach außen abgeschieden.

Es kann vorgesehen sein, dass das Abscheiderlaufrad 140 mit zumindest mit dem Laufrad 120 oder der Antriebsaufnahme 130 verbunden ist, wobei insbesondere eine Übersetzung vorgesehen ist, durch welche eine Drehzahl des Abscheiderlaufrades 140 sich von einer Drehzahl des Laufrades 120 unterscheiden kann. Mit anderen Worten kann das Abscheiderlaufrad 140 auch mittels einer Übersetzung zwischen Laufrad 120 und Abscheiderlaufrad 140 ausgeführt sein, um die optimalen Betriebspunkte des Laufrad 120 und der fliehkraftbasierten Abscheidung miteinander zu vereinen.

Ferner kann vorgesehen sein, dass zumindest ein Durchmesser D oder eine Höhe H der Antriebsaufnahme 130 derart gewählt ist, dass diese zumindest einem Durchmesser D oder einer Höhe H einer Antriebsaufnahme 130 eines weiteren Zubereitungswerkzeuges 400 entsprechen (wie beispielsweise in Figur 5 dargestellt), wobei das Zubereitungswerkzeug 400 dazu ausgeführt ist, eine von der Bereitstellung von Strömung verschiedene Funktion bereitzustellen. Hierdurch ergibt sich eine erleichterte Handhabung der Küchenmaschine und gleichzeitig eine Nutzbarkeitsaufwertung, da mehrere unterschiedliche Funktionen verfügbar sind. Weiterhin ist es bei einer erfindungsgemäßen Küchenmaschine 300 denkbar, dass die Antriebsaufnahme 130 eine Dichtung 131 aufweist, um die Antriebsaufnahme 130 gegen das Gefäß 320 und/oder die Basis 301 der Küchenmaschine 300 abzudichten.

Wie in der Figur 1 zu erkennen ist, kann bei einer Küchenmaschine 300 vorgesehen sein, dass ein Deckel 200 vorgesehen ist, welcher dazu ausgeführt ist, eine obere Öffnung des Gefäßes 320 zu verschließen. Die obere Öffnung des Gefäßes kann dazu ausgeführt sein, das Gefäß 320 mit Lebensmitteln 10 zu be- und entladen. Es kann vorgesehen sein, dass der Deckel 200 zumindest eine Deckelheizung 210, die dazu ausgeführt ist, die im Gefäß 320 eingeschlossene Luft aufzuheizen, oder ein Lüftungsventil 220, welches dazu ausgeführt ist, einen Druckunterschied zwischen einer Atmosphäre im Gefäß 320 und außerhalb des Gefäßes 320 unter einem vorbestimmten Wert zu halten, aufweisen kann. Alternativ oder in Ergänzung zum Lüftungsventil 220 kann auch vorgesehen sein, dass der Deckel nicht vollständig luftdicht schließt, sodass ein Luftaustausch zwischen der Umgebungsluft und der Luft im Gefäß 320 ermöglicht wird, wodurch einen Druckunterschied zwischen einer Atmosphäre im Gefäß 320 und außerhalb des Gefäßes 320 ausgleichbar ist.

Es kann zudem vorgesehen sein, dass das Gefäß 320 eine Isolation 322 aufweist, welche dazu konfiguriert ist, das Gefäß 320 thermisch von der Umgebung des Gefäßes 320 zu isolieren. In der in Figur 1 dargestellten Variante umschließt die Isolation 322 das Gefäß 320 im Wesentlichen vollständig, insbesondere an der seitlichen Wand 321 und am Gefäßboden 323. Durch die Isolation 322 ergibt sich eine verbesserte Effizienz der Küchenmaschine 300 bzw. der Heizung 110, 210, 310, da weniger Wärme der aufgewärmten Luft an die Umgebung verloren geht.

Auch wenn in der Figur 1 ein Strömungsheizer 110, eine Deckelheizung 210 und eine Gefäßheizung 310 dargestellt sind, kann vorgesehen sein, dass lediglich eine Heizung 110, 210, 310, welche insbesondere als Gefäßheizung 310 ausgebildet ist, vorgesehen ist. Ebenfalls kann lediglich ein Antrieb 330 vorgesehen sein. Dadurch können die Herstellungskosten der Küchenmaschine 300 verringert werden.

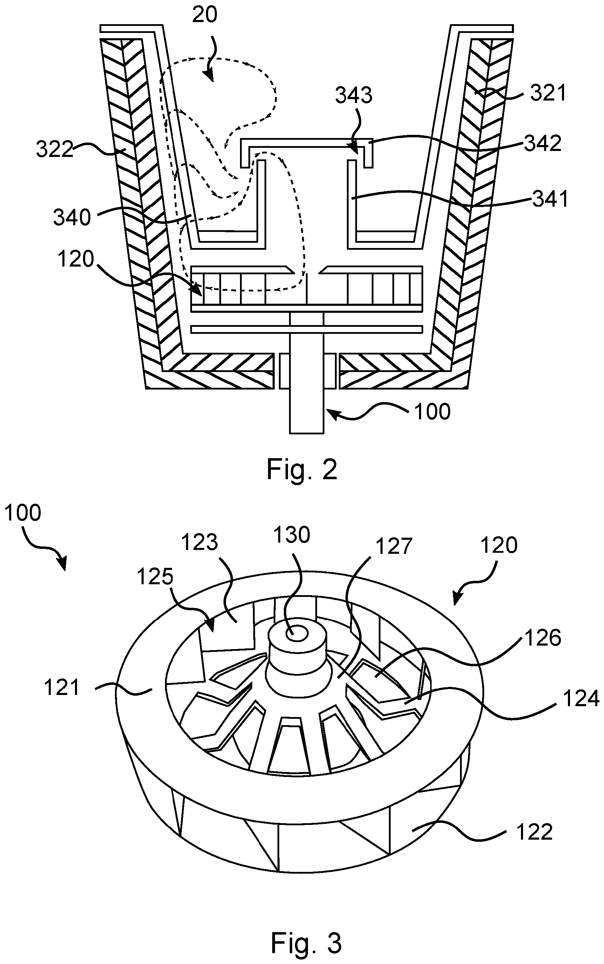

Bezugnehmend auf Figur 2 wird eine alternative oder ergänzende Möglichkeit zur Abscheidung von Schwebeteilchen und Partikeln erläutert. Bei dieser Variante wird die Luft vertikal nach oben und damit entgegen der Schwerkraft angesaugt, um Partikel und Flüssigkeiten höherer Dichte abzuscheiden. Die zur Abscheidung genutzte Schwerkraft ist im Gegensatz zur drehzahlabhängigen Fliehkraftabscheidung konstant. Der Vorteil dieser Schwerkraftabscheidung liegt im insbesondere im einfachen konstruktiven Aufbau.

Hierzu kann vorgesehen sein, dass der Korb 340 einen im Wesentlichen rohrförmigen Abschnitt 341 aufweist, welcher von einer Kappe 342 derart abgedeckt wird, dass eine im Wesentlichen ringförmige Öffnung 343 entsteht, durch welche die Luft zum Strömungserzeuger 100 strömt, wenn der Strömungserzeuger 100 vom Antrieb 330 angetrieben ist.

Ferner könnten zur Abscheidung weitere Vorkehrungen vorgesehen sein. Diese sind in Figur 4 dargestellt. Es kann zumindest ein als Metallgitter ausgeführter Korb 340, welcher insbesondere zwischen dem zumindest einen Lebensmittel 10 und dem Laufrad 120 angeordnet ist, eine Auffangschale, welche auf dem Laufrad 120 angeordnet ist (hier nicht dargestellt), eine Rinne 344 am Korb 340, ein insbesondere am im Wesentlichen rohrförmigen Abschnitt 341 angeordnetes, Strömungslabyrinth oder eine Auffangschale 331, welche unterhalb des Korbes 340 angeordnet ist, vorgesehen sein. Ferner kann auch eine Korböffnung 346 vorgesehen sein, durch die Fett nach unten ablaufen kann, wo dieses insbesondere durch die Auffangschale 331 aufgefangen werden kann

Der Korb 340 gemäß der Figur 4 hat seitliche Korbwände 347, welche insbesondere für Luft weniger durchdringlich ausgeführt sein können als ein Bodenabschnitt 345 des Korbes 340. Die seitlichen Korbwände 347 dienen zum einem im Zusammenhang mit dem Bodenabschnitt 345 zur Aufnahme des zumindest einen Lebensmittels 10. Zum anderen kann durch die seitlichen Korbwände 347 auch das Strömungsfeld 20 gestaltet werden.

Es kann ferner, wie in der Figur 4 ebenfalls dargestellt, auch ein oberer Korbabschnitt 348 vorgesehen sein. Dieser kann derart ausgeführt sein, dass dieser auf dem Gefäß 320 absetzbar ist. Hierdurch hängt der Korb 320 im Gefäß 320, insbesondere ohne den Gefäßboden 323 oder eine Auffangschale 331 zu berühren.

Wieder bezugnehmend auf Figur 3 ein Strömungserzeuger 100, welcher ein Laufrad 120 und eine Antriebsaufnahme 130 aufweist, dargestellt. Es kann vorgesehen sein, dass das Laufrad 120 ferner zumindest eine der folgenden Komponenten aufweist:
- einen Laufraddeckel 121 mit einer Öffnung 125, durch die Luft in das Laufrad 120 einströmen kann,
- einen Laufradboden 122, welcher dazu ausgeführt ist, die Strömung der Luft durch das Laufrad 120 zu begrenzen,
- zumindest eine Laufradschaufel 123, welche dazu ausgeführt ist, Luft zu beschleunigen, wobei insbesondere die zumindest eine Laufradschaufel 123 zwischen dem Laufraddeckel 121 und dem Laufradboden 122 angeordnet ist,
- einen Verbindungsabschnitt 127, welcher dazu ausgeführt ist, das Laufrad 120 mit der Antriebsaufnahme 130, insbesondere lösbar, zu verbinden.

Es kann vorgesehen sein, dass der Durchmesser des Laufraddeckels 121 im Wesentlichen dem Durchmesser eines Korbes 340 entspricht, in welchem das zumindest eine Lebensmittel 10 gehalten wird. Hierdurch wird die Anströmung es zumindest einen Lebensmittel 10 verbessert.

Ferner kann vorgesehen sein, dass die Antriebsaufnahme 130 zumindest teilweise durch die Öffnung 125 des Laufraddeckels 121 hindurchragt. Hierdurch ergibt sich eine Leitwirkung auf die Strömung, wodurch die Strömung der Luft in das Laufrad verbessert wird.

Der Laufradboden 122 kann sowohl mit als auch ohne zumindest eine Öffnung 126 ausgebildet sein. Das Vorsehen von Öffnungen 126 bietet den Vorteil, dass das Laufrad 120 bzw. der Strömungserzeuger 100 insgesamt leichter, insbesondere in einem Geschirrspüler, reinigbar ist, da durch zumindest eine Öffnung Reinigungsmittel besser verteilt werden kann. Ferner ist das Laufrad 120 mit weniger Material fertigbar, wodurch kosten gespart werden. Ein vollflächiger Laufradboden bietet den Vorteil, dass die mechanische Stabilität verbessert ist und zudem verhindert wird, dass sich eine die Laufräder umgehende eine Strömung ausbildet. Hierdurch lässt sich die Effizienz des Laufrades weiter steigern. Insbesondere können, wie abgebildet, acht Öffnungen vorgesehen sein.

Es kann ferner, wie gezeigt, vorgesehen sein, dass der Laufradboden 122 einen äußeren ringförmigen Abschnitt aufweist, welcher dazu ausgeführt ist, die Laufradschaufeln 123 zu tragen. Der ringförmige Abschnitt ist durch stegartige Träger mit einem Verbindungsabschnitt 127 verbunden, wobei der Verbindungsabschnitt 127 dazu konfiguriert ist, mit der Antriebsaufnahme 130 verbunden zu werden. Hierzu kann eine Rast und/oder Clipsverbindung vorgesehen sein, wodurch die Bedienbarkeit durch den Benutzer verbessert wird.

Die zumindest eine Laufradschaufel 123 kann insbesondere zwischen Laufraddeckel 121 und Laufradboden 122 angeordnet sein, wodurch sich eine besonders hohe mechanische Stabilität ergibt. Es kann jedoch auch vorgesehen sein, dass die zumindest eine Laufradschaufel 123 nur an einem Laufraddeckel 121 oder Laufradboden 122 angeordnet ist. Durch das Fortlassen eines Laufraddeckels 121 oder Laufradbodens 122 können Materialkosten gespart werden.

Es kann vorgesehen sein, dass zumindest zwei, insbesondere sämtliche oben aufgeführten Komponenten des Laufrades 120 einstückig (und/oder materialeinheitlich) ausgeführt sind. Hierdurch wird die mechanische Stabilität des Laufrades 120 weiter verbessert.

Ferner kann bei einer erfindungsgemäßen Küchenmaschine 300 vorgesehen sein, dass die Antriebsaufnahme 130 im Wesentlichen aus einem Metall, insbesondere aus einem Stahl geformt ist und/oder dass das Laufrad 120 im Wesentlichen aus einem Kunststoff, insbesondere aus einem thermoplastischen Kunststoff geformt ist.

In der Figur 5 ist beispielhaft ein weiteres Zubereitungswerkzeug 400 in Form eines Rührmessers 400 gezeigt. Dieses kann zumindest ein, insbesondere vier Messer 401 aufweisen. Ferner hat das Zubereitungswerkzeug 400 eine Antriebsaufnahme 430, wobei diese zumindest in ihrer Höhe H oder ihrem Durchmesser D den entsprechenden Abmessungen der Antriebsaufnahme 130 des Strömungserzeugers 100 entspricht. Hierdurch wird insbesondere die einfache Austauschbarkeit der Zubereitungswerkzeuge 100, 400 gewährleistet. Ferner kann auch das weitere Zubereitungswerkzeug 400 eine Dichtung 431 aufweisen, welche eine Dichtung des Gefäßinhaltes gegenüber der Basis 301 der Küchenmaschine 300 gewährleistet. Diese Dichtung 431 kann insbesondere ringförmig um die Antriebsaufnahme 430 angeordnet sein.

In Zusammenschau der Figuren 3 und 5 wird deutlich, dass sowohl der Strömungserzeuger 100 als auch das weitere Zubereitungswerkzeug 400 über die Antriebsaufnahme 130, 430 direkt durch den Antrieb 330 Küchenmaschine 300 angetrieben werden können.

Es kann ferner vorgesehen sein, dass der Strömungserzeuger 100 auf das weitere Zubereitungswerkzeug 400, insbesondere auf die Antriebsaufnahme 430 und/oder das Messer 401, aufsetzbar und mit diesem verbindbar ist, wodurch sich der Strömungserzeuger 100 über die Antriebsaufnahme 430 und den Antrieb 330 der Küchenmaschine in Rotation versetzen lässt.

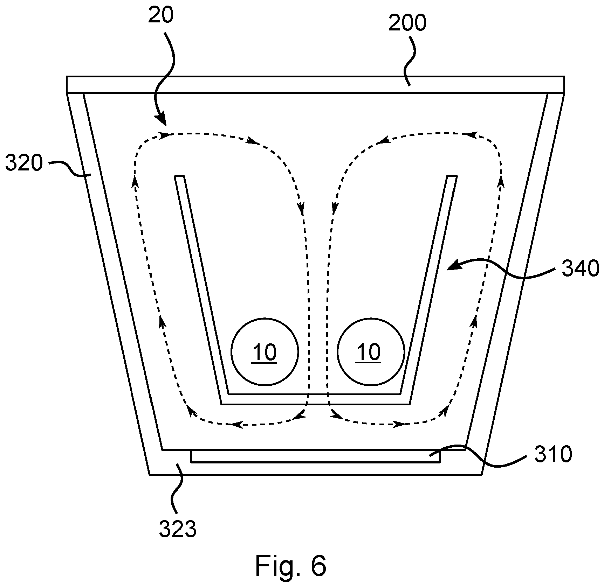

In Figur 6 ist ein Strömungsfeld 20 gezeigt, bei dem der Korb 340 und das Gefäß 320 eine seitliche Luftführung erzeugen, wobei die Luft durch den Strömungserzeuger 100 getrieben wird. Durch die Luftführung wird die von der Gefäßheizung 310 erwärmte Luft von oben auf das zumindest eine Lebensmittel 10 geleitet. Es kann vorgesehen sein, dass der Korb 340 hierzu an den seitlichen Korbwänden 347 zumindest weniger, kleinere (als am Boden) oder keine Öffnungen aufweist, um die Strömung zwischen Korb 340 und das Gefäß 320 nach oben zu leiten. Durch die seitliche Luftführung wird der Vorteil erreicht, dass durch Konvektion zusätzlich eine Strömung erzeugt wird, wodurch weniger Energie für den Strömungserzeuger 100 benötigt wird und zudem weniger Geräusche durch die Küchenmaschine 300 emittiert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Lebensmittel
- 20: Strömungsfeld

- 100: Strömungserzeuger, Zubereitungswerkzeug
- 110: Strömungsheizer
- 120: Laufrad
- 121: Laufraddeckel
- 122: Laufradboden
- 123: Laufradschaufel
- 125: Öffnung
- 126: Öffnung
- 127: Verbindungsabschnitt
- 130: Antriebsaufnahme
- 131: Dichtung
- 140: Abscheiderlaufrad

- 200: Deckel
- 210: Deckelheizung
- 220: Lüftungsventil

- 300: Küchenmaschine
- 301: Basis
- 310: Gefäßheizung
- 320: Gefäß
- 321: Gefäßwand
- 322: Isolation
- 323: Gefäßboden
- 324: obere Öffnung
- 330: Antrieb
- 331: Auffangschale
- 340: Korb
- 341: rohrförmiger Abschnitt
- 342: Kappe
- 343: Öffnung
- 344: Rinne
- 345: Bodenabschnitt
- 346: Korböffnung
- 347: seitliche Korbwand
- 348: oberer Korbabschnitt

- 400: weiteres Zubereitungswerkzeug
- 401: Messer
- 430: Antriebsaufnahme
- 431: Dichtung

- D: Durchmesser
- H: Höhe

## Patentansprüche

1. Küchenmaschine (300) zur Zubereitung von zumindest einem Lebensmittel (10), aufweisend:
- einen Antrieb (330), welcher dazu ausgeführt ist, zumindest ein Zubereitungswerkzeug (100, 400) in Bewegung zu versetzen,
- ein als ein Strömungserzeuger (100) ausgeführtes Zubereitungswerkzeug (100) zum Anströmen des zumindest einen Lebensmittels (10) mit Luft im Gefäß (320),
- ein Gefäß (320), welches dazu ausgeführt ist, das zumindest eine Lebensmittel (10) aufzunehmen,
wobei das Gefäß (320) eine Gefäßheizung (310) aufweist, die dazu ausgeführt ist, die im Gefäß (320) eingeschlossene Luft aufzuheizen, wobei die Gefäßheizung (310) in einem Boden des Gefäßes (320) integriert ist.

2. Küchenmaschine (300) nach Anspruch 1,
**dadurch gekennzeichnet,**
**dass** der Strömungserzeuger (100) ferner
- eine Antriebsaufnahme (130), welche dazu ausgeführt ist, mit einem Antrieb (330) der Küchenmaschine (300) lösbar verbunden zu werden und eine Bewegung des Antriebes (330) zu übertragen, und/oder
- ein Laufrad (120), welches mit der Antriebsaufnahme (130) verbunden ist,
umfasst, wobei das Laufrad (120) dazu ausgeführt ist, durch den Antrieb (330) über die Antriebsaufnahme (130) in Bewegung versetzt zu werden, wodurch innerhalb des beheizbaren Gefäßes (320) ein Strömungsfeld (20) erzeugt wird.

3. Küchenmaschine (300) nach Anspruch 2,
**dadurch gekennzeichnet,**
**dass** zumindest das Laufrad (120) oder die Antriebsaufnahme (130) frei von elektrischen Komponenten, insbesondere frei von einem Strömungsheizer (110) ist.

4. Küchenmaschine (300) nach einem der vorhergehenden Ansprüche,
**dadurch gekennzeichnet,**
ein Abscheiderlaufrad (140) vorgesehen ist, welches vorzugsweise stromaufwärts des Laufrades (120) angeordnet und dazu konfiguriert ist, in der Luft enthaltene Schwebstoffe abzuscheiden.

5. Küchenmaschine (100) nach Anspruch 4,
**dadurch gekennzeichnet,**
**dass** das Abscheiderlaufrad (140) mit zumindest dem Laufrad (120) oder der Antriebsaufnahme (130) verbunden ist, wobei insbesondere eine Übersetzung vorgesehen ist, durch welche eine Drehzahl des Abscheiderlaufrades (140) sich von einer Drehzahl des Laufrades (120) unterscheiden oder variieren kann.

6. Küchenmaschine (300) nach einem der vorhergehenden Ansprüche,
**dadurch gekennzeichnet,**
**dass** das Laufrad (120) ferner zumindest eine der folgenden Komponenten aufweist:
- einen Laufraddeckel (121) mit einer Öffnung (125), durch die Luft in das Laufrad (120) einströmen kann,
- einen Laufradboden (122), welcher dazu ausgeführt ist, die Strömung der Luft durch das Laufrad (120) zu begrenzen,
- zumindest eine Laufradschaufel (123), welche dazu ausgeführt ist, Luft zu beschleunigen, wobei insbesondere die zumindest eine Laufradschaufel (123) zwischen dem Laufraddeckel (121) und dem Laufradboden (122) angeordnet ist,
- einen Verbindungsabschnitt (127), welcher dazu ausgeführt ist, das Laufrad (120) mit der Antriebsaufnahme (130), insbesondere lösbar, zu verbinden.

7. Küchenmaschine (300) nach einem der vorhergehenden Ansprüche,
**dadurch gekennzeichnet,**
**dass** lediglich ein Antrieb (330) und/oder lediglich eine Heizung (110, 210, 310) vorgesehen sind, wobei insbesondere die lediglich eine Heizung (110, 210, 310) als Gefäßheizung (310) ausgeführt ist.

8. Küchenmaschine (300) nach einem der vorhergehenden Ansprüche,
**dadurch gekennzeichnet,**
**dass** das Gefäß (320) mit dem Strömungserzeuger (100) im Wesentlichen luftdicht verschließbar ist, sodass der Strömungserzeuger (100) eine Umluft erzeugt.

9. Küchenmaschine (300) nach einem der vorhergehenden Ansprüche,
**dadurch gekennzeichnet,**
**dass** ein Korb (340) vorgesehen ist, welcher dazu ausgeführt ist, das zumindest eine Lebensmittel (10) aufzunehmen und beabstandet von einer Gefäßwand (321) des Gefäßes (320) und zumindest dem Zubereitungswerkzeug (100) oder dem weiteren Zubereitungswerkzeug (400) zu halten.

10. Küchenmaschine (300) Anspruch 9,
**dadurch gekennzeichnet,**
**dass** der Korb (340) einen im Wesentlichen rohrförmigen Abschnitt (341) aufweist, welcher von einer Kappe (342) derart abgedeckt wird, dass eine im Wesentlichen ringförmige Öffnung (343) entsteht, durch welche die Luft zum Strömungserzeuger (100) strömt, wenn der Strömungserzeuger (100) vom Antrieb (330) angetrieben ist.

11. Küchenmaschine (300) nach einem Ansprüche 9 oder 10,
**dadurch gekennzeichnet,**
**dass** der Korb (340) an einem Bodenabschnitt (345) zumindest eine Rinne (344) aufweist, welche dazu ausgeführt ist, mit der Luftströmung transportierte Schwebstoffe aufzunehmen, oder eine Öffnung (346) aufweist, durch die mit der Luftströmung transportierte Schwebstoffe aus dem Korb (340) heraustreten können.

12. Küchenmaschine (300) nach einem der vorhergehenden Ansprüche,
**dadurch gekennzeichnet,**
**dass** eine Auffangschale (331) vorgesehen ist, welche zumindest oberhalb des Strömungserzeugers (100) oder unterhalb eines Korbes (340) angeordnet und dazu ausgeführt ist, mit der Luftströmung transportierte Schwebstoffe aufzunehmen.

13. Küchenmaschine (300) nach einem der vorhergehenden Ansprüche,
**dadurch gekennzeichnet,**
**dass** ein Deckel (200) vorgesehen ist, welcher dazu ausgeführt ist, eine obere Öffnung (324) des Gefäßes (320) zu verschließen, wobei insbesondere der Deckel (200) zumindest aufweist:
- eine Deckelheizung (210), die dazu ausgeführt ist, die im Gefäß (320) eingeschlossene Luft aufzuheizen, oder
- ein Lüftungsventil (220), welches dazu ausgeführt ist, einen Druckunterschied zwischen einer Atmosphäre im Gefäß (320) und außerhalb des Gefäßes (320) unter einem vorbestimmten Wert zu halten.

14. Küchenmaschine (300) nach einem der vorhergehenden Ansprüche,
**dadurch gekennzeichnet,**
**dass** der Strömungserzeuger (100) einen Strömungsheizer (110) aufweist, der dazu ausgeführt ist, die im Gefäß (320) eingeschlossene Luft aufzuheizen.

15. Verfahren zum Betreiben einer Küchenmaschine (300), wobei die Küchenmaschine (300) insbesondere nach einem der Ansprüche 1 bis 14 ausgeführt ist, zur Zubereitung von zumindest einem Lebensmittel (10) beinhaltend:
- Bereitstellen eines Antriebs (330) in einer Basis (301),
- Lösbares Verbinden einer Antriebsaufnahme (130) eines ersten Zubereitungswerkzeugs (100) mit dem Antrieb (330),
- Verbinden des Gefäßes (320) mit der Basis (301),
- In Bewegung Versetzen eines Zubereitungswerkzeugs (100, 400) mit einer Antriebsaufnahme (130, 430) durch einen Antrieb (330), wodurch eine erste Funktion bereitgestellt wird,
- Heizen zumindest einer sich im Gefäß (320) befindlichen Luft durch eine Heizung (310),
- Lösen der Verbindung der Antriebsaufnahme (130) mit dem Antrieb (330),
- Lösbares Verbinden einer Antriebsaufnahme (430) eines weiteren Zubereitungswerkzeugs (400) mit dem Antrieb (330),
wobei die Heizung zum Heizen der sich im Gefäß (320) befindlichen Luft als eine Gefäßheizung (310) ausgeführt ist, die in einem Boden des Gefäßes (320) integriert ist.
